# EUROPEAN PATENT APPLICATION

(11) **EP 3 944 913 A1**
(43) Date of publication of application: **02.02.2022**
(21) Application number: 21185290.0
(22) Date of filing: 13.07.2021
(51) Int. Cl.: B22F 7/02, B22F 10/25, B22F 10/28, B22F 10/62, B22F 10/64, B33Y 10/00, B33Y 30/00, B33Y 40/20, H02K 1/00, H02K 15/00

(54) **INSULATED FERROMAGNETIC LAMINATES AND METHOD OF MANUFACTURING**

(30) Priority: 28.07.2020 US 202016940868
(71) Applicant: GE Aviation Systems LLC, Grand Rapids, MI 49512 (US)
(72) Inventor: ZHANG, Lili, Grand Rapids, 49512 (US); O'BRIEN, Michael, Grand Rapids, 49512 (US); HOEL, Cathleen, Grand Rapids, 49512 (US); ZOU, Min, Grand Rapids, 49512 (US); ADHARAPURAPU, Raghavendra, Grand Rapids, 49512 (US)
(74) Representative: Openshaw & Co.

(57) **Abstract**

A method (800), (900) of making a component (500) of an electric machine using an additive manufacturing process is disclosed. The method includes forming a first lamina (110) of a conductive material (48), building a first layer (113) of a second material (72) on a first surface (102) of the first lamina (110), treating the second material (72) on the first surface (102) of the first lamina (110) to define a first insulative layer (113), and building on the first insulative layer (113) a second lamina (210) of a conductive material (49). The steps can be repeated iteratively until a desired thickness or number of layers is reached.

## Description

### TECHNICAL FIELD

This invention relates to generally to an additive manufacturing process to manufacture laminated ferromagnetic components for electric machines.

### BACKGROUND

In electric machines, such as motors and generators, ferromagnetic parts channel magnetic flux. These parts are conventionally structured as insulated plates or laminas (typically of iron or iron alloy) assembled or stacked together to form a core of the ferromagnetic part. The core may define a rotor or a stator. An insulation layer is disposed between each lamina to insulate the respective lamina (e.g., as a barrier to eddy currents) from adjacent laminas in the core. Typically, the thickness of one repeating lamination unit is composed of 95% (so called stacking factor) magnetic sheet and 5% insulation. For example, a typical lamination sheet thickness may be about .010 inch (i.e., 10 mils), and the insulating layer may be 0.5 mil or less

Electric machine magnetic laminated cores often comprise a circular structure (e.g., a donut-shaped ring) which may include features such as slots arranged to receive windings therein. In other examples, the laminated core may comprise a rectangular structure (e.g., an E-shaped frame). However, laminated cores can comprise any number of desired shapes, sizes, and geometries. Each repeating laminated structure is typically composed of one layer of magnetic sheet and one layer of insulating sheet, and the magnetic core could have any number of such repeating laminated structure.

With conventional methodologies, assembling multiple insulated laminated parts together to form a single part or core presents many challenges. More complex topologies may decrease losses, increase magnetic flux density, or both, but are difficult to manufacture.

More recently, additive manufacturing (AM) technologies have been used to optimize part and system design and reduce defects compared to traditional casting. However, conventional AM technology has been limited in its ability to produce magnetic laminations because of the challenges presented in building the insulating layer between the magnetic sheets. For example, at least one conventional approach to manufacturing ferromagnetic laminations has been to apply a polymeric dielectric material as an electrical insulator between the lamination sheets. The use of such polymeric materials limits the machine operating temperature to be no greater than 300 °C.

### BRIEF DESCRIPTION

In one aspect, the present disclosure relates to a method of making a laminated ferromagnetic component of an electric machine. The method includes forming a first lamina of a first conductive material, forming a layer of a second material on a first surface of the first lamina, and treating the layer of the second material to thereby define a first insulative layer. The method further includes forming, on the first insulative layer, a second lamina of the first conductive material.

In another aspect, the present disclosure relates to an additive manufacturing system configured to form a first lamina of a conductive first material, deposit a layer of a second material on a first surface of the first lamina and treat the layer of the second material to thereby define a first insulative layer. The system is also configured to form, on the first insulative layer, a second lamina of a conductive third material.

These and other features, aspects and advantages of the present disclosure will become better understood with reference to the following description and appended claims. The accompanying drawings, which are incorporated in and constitute a part of this specification, illustrate aspects of the disclosure and, together with the description, serve to explain the principles of the disclosure.

### BRIEF DESCRIPTION OF THE DRAWINGS

A full and enabling disclosure of the present description, including the best mode thereof, directed to one of ordinary skill in the art, is set forth in the specification, which makes reference to the appended FIGS., in which:
FIG. 1 illustrates a diagrammatic view of an additive manufacturing system in accordance with various aspects described herein;
FIG. 2 illustrates a diagrammatic view of the additive manufacturing system of FIG. 1 with a second layer, in accordance with various aspects described herein;
FIG. 3 illustrates a diagrammatic view of an additive manufacturing system, with a first insulative layer, in accordance with various aspects described herein;
FIG. 4 illustrates a diagrammatic view of the additive manufacturing system of FIG. 3 with a sinter treatment in accordance with various aspects described herein;
FIG. 5 illustrates a diagrammatic view of an additive manufacturing system, with a chemical treatment of the first insulative layer in accordance with various aspects described herein;
FIG. 6 illustrates a diagrammatic view of an alternative additive manufacturing system in accordance with various aspects described herein;

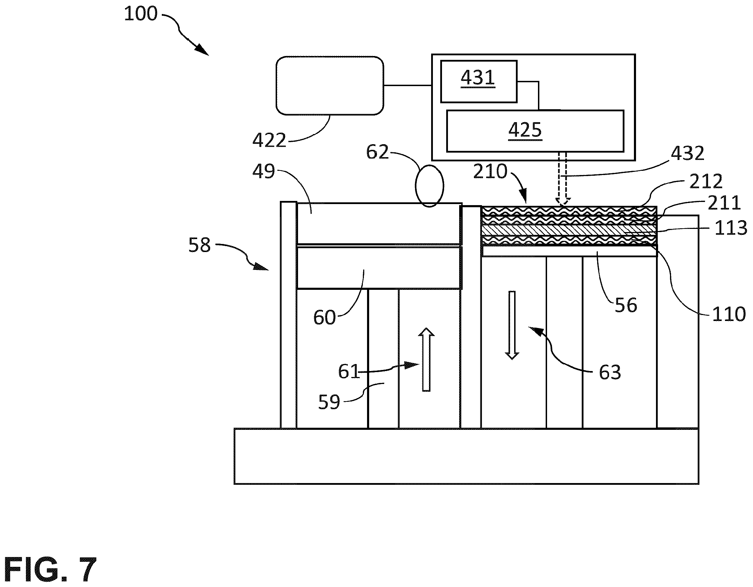

FIG. 7 illustrates a diagrammatic view of the additive manufacturing system of FIG. 6 with a second layer in accordance with various aspects described herein;
FIGS. 8A-8E illustrate in a sequential diagrammatic view, a laminated ferromagnetic component in accordance with various aspects described herein;
FIG. 9 is a flow diagram of a method of making a laminated component in accordance with various aspects described herein; and
FIG. 10 is a flow diagram of an alternative method of making a laminated component in accordance with various aspects described herein.

### DETAILED DESCRIPTION

All directional references (e.g., radial, axial, upper, lower, upward, downward, left, right, lateral, front, back, top, bottom, above, below, vertical, horizontal) are only used for identification purposes to aid the reader's understanding of the disclosure, and do not create limitations, particularly as to the position, orientation, or use thereof. Connection references (e.g., attached, coupled, connected, and joined) are to be construed broadly and can include intermediate members between a collection of elements and relative movement between elements unless otherwise indicated. As such, connection references do not necessarily infer that two elements are directly connected and in fixed relation to each other. The exemplary drawings are for purposes of illustration only and the dimensions, positions, order and relative sizes reflected in the drawings attached hereto can vary.

It will be understood that the illustrated aspects of the disclosure as depicted in the Figures herein are only for purposes of illustration and intended as non-limiting examples, and many other possible aspects and configurations in addition to that shown are contemplated by the present disclosure. It will be understood that while aspects of the disclosure are shown, for ease of understanding, in the simple arrangements shown in the Figures herein, the disclosure is not so limited and has general application to electrical components having any number of laminations.

In accordance with example aspects of the present disclosure, various components may be formed or "printed" using an additive-manufacturing process, such as a three-dimensional printing process. The use of such a process may allow the components to be formed integrally, as a single monolithic component, or as any suitable number of sub-components. In particular, the manufacturing process may allow these components to be integrally formed and include a variety of features not possible when using prior manufacturing methods.

As used herein, the terms "additively manufactured" or "additive manufacturing techniques or processes" refer generally to manufacturing processes wherein successive layers of material(s) are provided on each other to "build-up", layer-by-layer, a three-dimensional component. In some embodiments, the successive layers generally fuse together to form a monolithic component which may have a variety of integral sub-components. Although additive manufacturing technology is described herein as providing for the fabrication of complex objects by building objects point-by-point, layer-by-layer, typically in a vertical direction, other methods of fabrication are possible and within the scope of the present disclosure. For example, although the discussion herein refers to the addition of material to form successive layers, one skilled in the art will appreciate that the methods and structures disclosed herein may be practiced with any additive manufacturing technique or manufacturing technology. For example, embodiments of the present invention may use layer-additive processes, layer-subtractive processes, or hybrid processes.

As used herein, the terms "sinter" or "sintering" refers generally a conventional process of compacting and forming a solid mass of material by heat or pressure without melting it to the point of liquefaction.

At least some additive manufacturing systems involve the material buildup of a component to define any number of three-dimensional (3D) shapes, including a sheet or plate having any desired shape and cross-sectional geometry. Additive manufacturing processes fabricate components using 3D information, for example a 3D computer model, of the component. Accordingly, a 3D design model of the component may be defined prior to manufacturing. In this regard, a model or prototype of the component may be scanned to determine the 3D information of the component. As another example, a model of the component may be constructed using a suitable computer aided design (CAD) program to define the 3D design model of the component.

The design model may include 3D numeric coordinates of the entire configuration of the component including both external and internal surfaces of the component. For example, the design model may define the body, the component base, the surface, any surface features such as irregularities or datum features, as well as internal passageways, openings, support structures, etc. For example, in an aspect, the three-dimensional design model is converted into a plurality of slices or segments, e.g., along a central (e.g., vertical) axis of the component or any other suitable axis. Each slice may define a two-dimensional (2D) cross section of the component for a predetermined height of the slice. The plurality of successive 2D cross-sectional slices together form the 3D component. The component is then "built-up" slice-by-slice, or layer-by-layer, until finished.

In addition, utilizing an additive process, the surface finish and features of the components may vary as needed depending on the application. For example, the surface finish can be adjusted (e.g., made smoother or rougher) by selecting appropriate parameters (e.g., laser parameters) during the additive process. A rougher finish may be achieved by increasing laser scan speed or a thickness of a powder layer, and a smoother finish can be achieved by decreasing laser scan speed or the thickness of the powder layer. The laser scanning pattern and/or laser power can also be changed to change the surface finish in a selected area of the components.

Various aspects of the disclosure described herein can employ any of a number of conventional 3D printing, or additive manufacturing (AM) techniques, such as selective laser melting (SLM) or selective laser sintering (SLS). For example, some known additive manufacturing systems, such as Direct Metal Laser Melting (DMLM) systems, can be used to fabricate components. Accordingly, while various aspects are described herein as employing SLM, also known as direct metal laser melting (DMLM) or laser powder bed fusion (LPBF), other aspects are not so limited, and can employ any suitable AM technique without departing from the scope of the claims.

In this manner, the components described herein can be fabricated using the additive manufacturing process, or more specifically each layer can be successively formed, such as by iteratively sintering metal powder using laser energy or heat, and fusing the sintered material together. For example, a particular type of additive manufacturing process can use an energy beam, for example, an electron beam or electromagnetic radiation such as a laser beam, to sinter or melt a powder material. Any suitable laser and laser parameters can be used, including considerations with respect to power, laser beam spot size, and scanning velocity. The build material can be formed by any suitable powder or material selected for enhanced strength, durability, and useful life, particularly at high temperatures.

It will be understood that conventional AM systems generally use a laser device, such as a high power-density laser, which can include a control portion and heat source that produce a laser beam to melt successive layers of a material such as a metallic powder. More specifically, conventional AM systems use a laser beam to transfer heat to selected areas of a bed of a powder material, such as a powdered metal, to melt or sinter the selected areas of the powder material with the laser beam to thereby form a melt pool. As the melt pool cools, the melted or sintered material then fuses together to form a solid three-dimensional object. The laser beam can be applied to the selected areas of the powder based on a digital model (e.g., CAD file). The conventional AM system will successively add another bed of powder above the first layer, and repeat the sintering and fusing process until the object is completely formed.

Typically, AM systems (e.g., SLS, DMLS, and SLM) use a laser beam to provide the thermal energy. However, in various applicable aspects of the disclosure, other AM systems employing any desired heat source that causes the desired amount or degree of melting or sintering of the powdered material can be used without departing from the scope of the claims.

For ease of understanding, the AM systems described herein are described having a single heat source (e.g., a laser beam device). It will be appreciated the aspects of the disclosure are not so limited and can include more than one heat source (e.g., more than one laser beam device) or alternative heat sources. For example, without limitation, an alternative AM system can have a first laser device having a first power and a second laser device having a second power different from the first laser power, an alternative AM system can have at least two laser devices having substantially the same power output, or the like. However, the AM system can include any combination of laser devices that permit the AM system to operate as described herein.

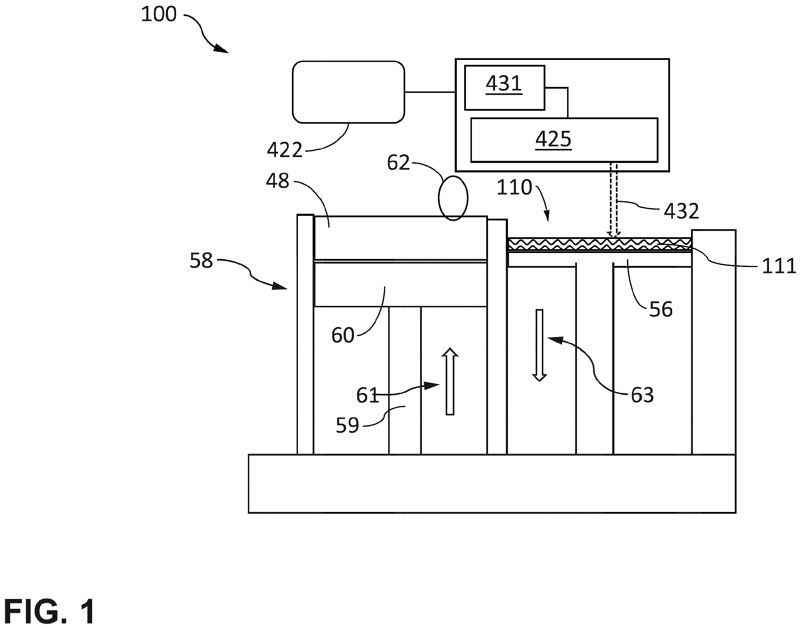

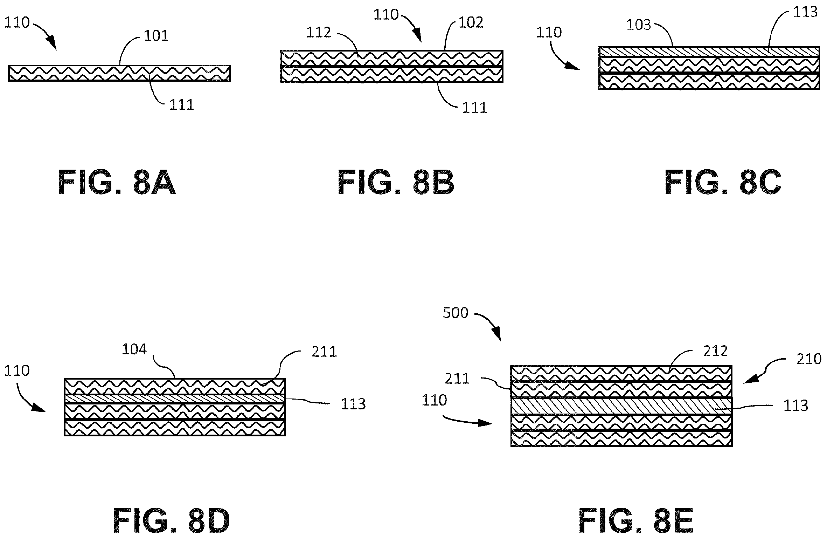

With reference to FIG. 1, an AM system 100 is operated to fabricate a laminated component 500, in a layer-by-layer manufacturing process. More specifically, an AM system 100 is operated to fabricate a first portion or layer 111 of a laminated component 500 (shown in FIG. 8E), such as a first sheet or lamina 110 of component 500, in a layer-by-layer manufacturing process.

The first lamina 110 can be fabricated based on an electronic representation of a 3D geometry of first lamina 110. The electronic representation can be produced in a computer-aided design (CAD) or similar data (not shown). The design, structure, or the like, of the first lamina 110 can be converted into a layer-by-layer format that includes a plurality of build parameters for each layer 111, 112 of lamina 110. In one non-limiting aspect of the disclosure, the geometry of first lamina 110 is sliced into a stack of layers of a desired thickness, such that the geometry of each layer is an outline of the cross-section through first lamina 110 at that particular layer location.

In an aspect, the AM system 100 forms the first lamina 110 by implementing the layer-by-layer manufacturing method such as a direct metal laser melting method. The exemplary layer-by-layer additive manufacturing method does not use a pre-existing article as the precursor to a final component 500, rather the method produces first lamina 110 from a raw material in a configurable form, such as a powder, for example stored in a powder reservoir.

In the non-limiting aspect depicted in FIG. 1, the AM system 100 includes a powder delivery system 58 including a moveable powder delivery piston 59, powder delivery table 60, and a spreader 62. A moveable build platform 56 receives a first material 48 in the form of a powder from the powder delivery system 58. The system also includes a controller module 422 in communication with a conventional laser scanner device 425 and heat source 431 to selectively apply a laser beam 432 to the first material 48 deposited on the build platform 56.

The powder delivery piston 59 can be moveable in a first direction (shown as arrow 61) to advance the powder delivery table 60 to deliver the first material 48. The build platform 56 receives the first material 48 and is moveable in a second direction (shown as arrow 63) to accommodate an increasing thickness of the first lamina 110 as it is built up. The first material 48 can be spread using the spreader 62, such as a conventional rake, blade, or roller device, to laterally spread the first material 48 at, across, or overlying the build platform 56, the laminae (such as the first lamina 110), or a combination thereof, to a predetermined thickness. In various aspects, predetermined thickness may be between 0.001 mm and 0.2 mm. In other aspects, any desired thickness of powder may be used without departing from the scope of the disclosure.

In various aspects, the first material 48 can comprise any desired conductive material. For example, in non-limiting compositions the material can comprise a composition of Fe-Si with a percentage by weight, (wt. %) of silicon between 0.1 wt.% and 6.5 wt.%. In other non-limiting compositions, the material can comprise iron cobalt alloys having a composition containing cobalt between 5 wt.% and 50 wt.%, vanadium between 0 wt.% and 2 wt.%, niobium between 0 wt.% and 0.5%, and chromium between 0 wt.% and 1 wt.%. Still other non-limiting compositions can comprise a powder including iron nickel alloys with a composition containing nickel between 30 wt.% and 80 wt.%. Other non-limiting compositions can comprise any number of other conductive compositions, and can be magnetic or non-magnetic, without departing from the aspects of the disclosure explained herein.

In some non-limiting aspects, the first material 48 can comprise a metal alloy that can include iron, cobalt, vanadium, and carbon. In some other aspects, the metal alloy can include iron, cobalt, vanadium and niobium. In still other aspects, the metal alloy can include iron, cobalt, vanadium, niobium and carbon.

In some aspects, the first material 48 can further includes a first alloying element present in the range of about 0.001 atomic percent to about 10 atomic percent selected from the group consisting of boron, aluminum, silicon, germanium, yttrium, titanium, zirconium, hafnium, vanadium, niobium, tantalum, chromium, molybdenum, tungsten, manganese, rhenium, ruthenium, rhodium, iridium, nickel, palladium, platinum, copper, silver, gold, and combinations thereof, and a second alloying element present in the range of about 0.001 atomic percent to about 0.5 atomic percent selected from the group consisting of carbon, oxygen, nitrogen, and combinations thereof. In some aspects, the first alloying element can be present in a range of about 0.01 atomic percent to about 7 atomic percent. In certain embodiments, the first alloying element may be present in a range of about 0.1 atomic percent to about 5 atomic percent. In certain aspects, the first material 48 can include vanadium, niobium, carbon and a combination thereof. Vanadium and niobium, individually, may be present in a range of about 0.1 atomic percent to about 10 atomic percent. In some aspects, vanadium and niobium, individually, may be present in a range of about 0.1 atomic percent to about 5 atomic percent.

In non-limiting aspects, the first material 48 can comprise particles having diameters ranging from, for example, 15 to 45 microns. Other aspects can comprise a first material 48 comprising particles having diameter ranging from 44 to 150 microns.

The conventional laser scanner device 425 is cooperative with the heat source 431 and arranged to direct the application of a laser beam 432 in a manner to selective locations on the metal power 48 deposited on the build platform 56. The controller module 422 is operative to execute instructions, based at least on the data defining the component to be created, to cause the scanner 425, to direct the laser beam 432 to predetermined locations of the first material 48 deposited on the build platform 56. The localized heat from laser beam 432 the causes the first material 48 to melt or sinter at those predetermined locations. The sintered first material 48 can subsequently cool and fuse to itself to thereby form a desired first layer 111 of the first lamina 110. Excess, unused, or unmelted powder can be brushed, blown, jetted, or blasted away. Alternatively, excess, unused, or unmelted powder of the first material 48 can remain in-place at or on the build platform 56 and be utilized as at least a partially supporting structure for future laminae layering.

In the exemplary aspects described herein, the AM system 100 controller module 422 can be any type of controller module. The controller module 422 can comprise a computer system that includes at least one processor (not shown) and at least one memory device (not shown) that executes operations to control the operation of the AM system 100 based at least partially on instructions from human operators or digital instruction, including but not limited to data or executable instructions. Controller module 422 can include, for example, a 3D model of a part such as first lamina 110 (or a first insulative layer 113, as shown in 9C) to be fabricated by AM system 100. Operations executed by controller module 422 can include controlling power output of the heat source 431 and adjusting galvanometers (not shown) to control the speed and direction of the scanner 425 to achieve a selective application, or "pass" of the laser beam 432 to the first material 48.

In some aspects, the material forming the first lamina 110 can be built up in a single "pass" or single layer to define the first lamina 110. In other aspects, the first lamina 110 can be built up in multiple successive "passes" or multiple successive layers to thereby define the first lamina 110. In such an aspect, a height of build platform 56 can be adjusted (e.g., lowered in the direction 63) between each successive pass, and the process repeated, until the predetermined geometry or a predetermined thickness of the first lamina 110 is achieved. For example, in or at each successive "pass" of forming a layer or lamina (such as the first lamina 110, or successive laminae), the build platform 56 can be lowered or dropped, making room or allowing for space for the following or subsequent layer or lamina.

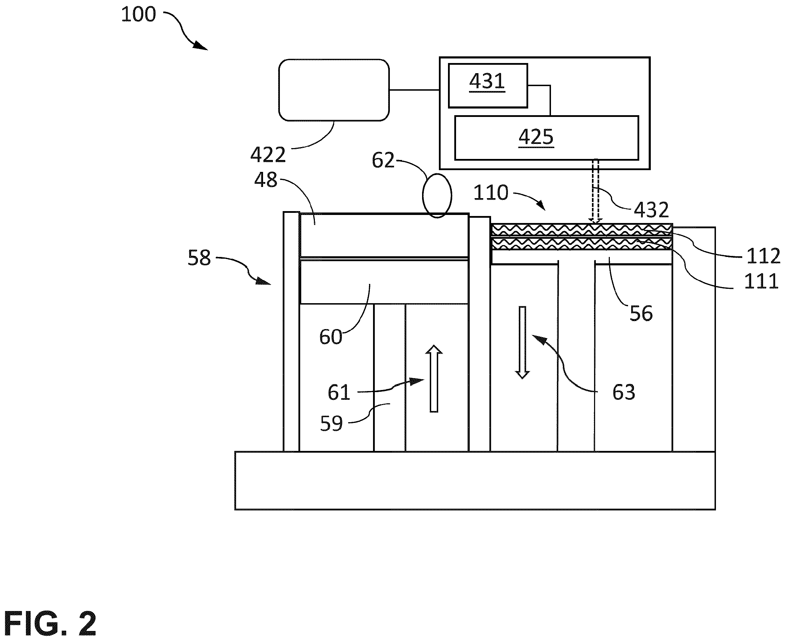

With reference to FIG. 2, the height of the build platform 56 can be adjusted in the second direction 63 (e.g., lowered) and the process can be repeated to build the next, successive, or second layer 112 or portion of the first lamina 110. That is, following a like process as described herein to build the first layer 111 of the first lamina 110, a new or second layer of the first material 48 can be deposited by the powder delivery system 58. However, rather than depositing the first material 48 directly onto the build table 56, the first material 48 is instead deposited onto a surface 101 (e.g. a top surface) of the first layer 111 of the first lamina 110 when supported by the build platform 56, and spread using the spreader 62 to a predetermined thickness. The heat source 431 and scanner 425 then cooperatively position the laser beam 432 to provide heat to selective portions of the second layer of first material 48 causing the first material 48 to completely or at least partially melt at those selective locations. As the melted first material 48 cools, it subsequently fuses to itself, and to the first layer 111 of the first lamina 110, to thereby form a second layer 112 of the first lamina 110. This process is repeated until all desired layers of the first lamina 110 are printed, that is, until a predetermined thickness or geometry of the first lamina 110 is reached. For example, in various aspects of the disclosure, the predetermined thickness of the first lamina can be in the range of 0.05 mm to 5 mm. Again, any excess, unused, or unmelted powder can be brushed, blown, jetted, or blasted away, or remain in-place, in-between successive layering or melting cycles.

For ease of understanding, with reference to FIGS. 8A and 8B, the method of building or forming the first lamina 110 is described herein using two layers 111, 112. However, it will be appreciated that any number of layers, including only one, having any desired thickness can be used without departing from the scope of the claims in order to build the first lamina 110 to a predetermined thickness. Additionally, in aspects of the disclosure, each independent layer 111, 112 can comprise an identical thickness, or different thicknesses, compared to any other layer 111, 112 of the first lamina 110.

Once the first lamina 110 is formed, a first insulative layer 113 comprising a second material 72 can be formed thereon. For example, with reference to FIG. 8C, the first lamina 110 can define a first surface 102, (e.g. a top surface) and first insulative layer 113 can be built up on the first surface 102 (e.g., the top surface 102 of first lamina 110). The second material 72 comprising the first insulative layer 113 is deposited directly onto the first surface 102 of the first lamina 110. The first lamina 110 can be adjustably supported by the build platform 56 as the second material 72 is applied or deposited on the first surface 102.

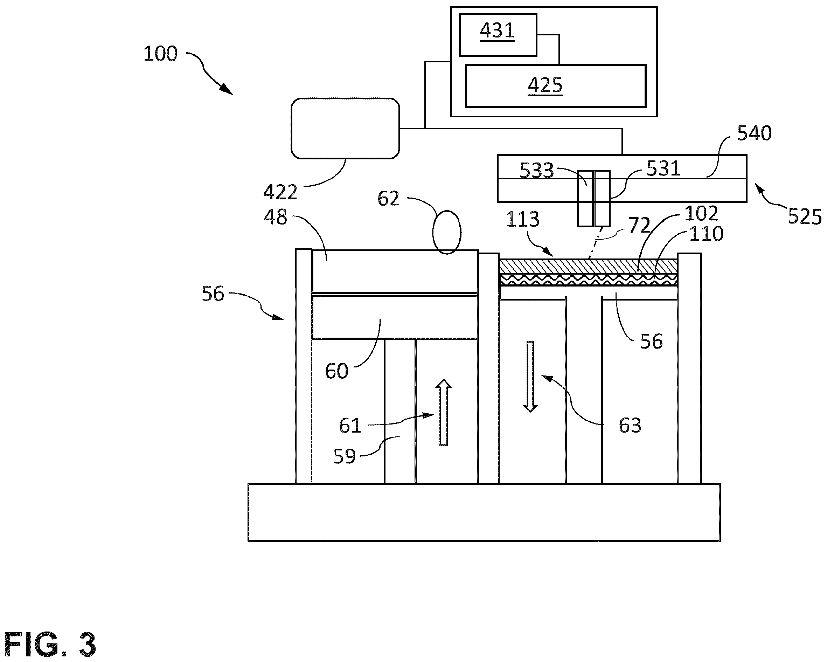

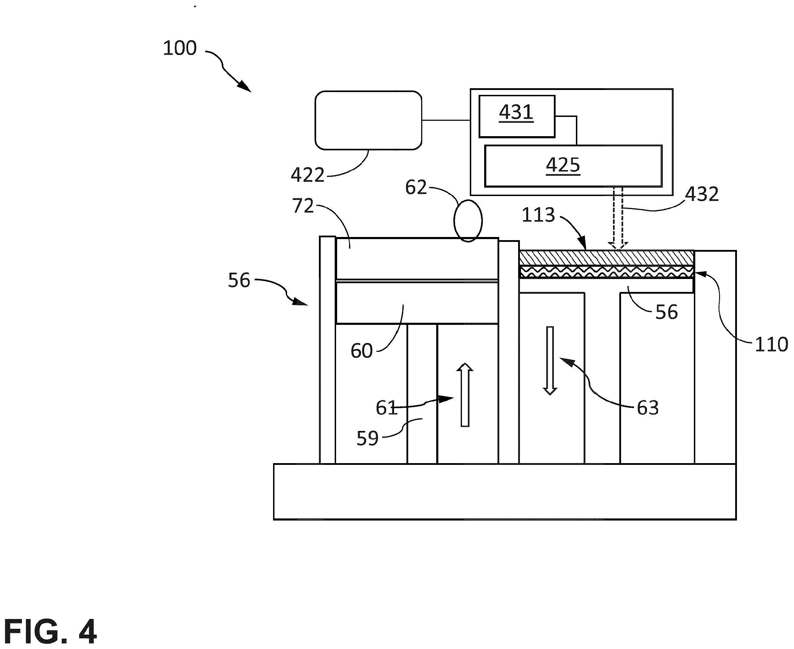

In non-limiting aspects, the first insulative layer 113 can be formed via a conventional material jetting process. In other aspects, the second material 72 forming the first insulative layer 113 can be deposited using a conventional aerosol jet spray deposition process. In yet other aspects, the first insulative layer 113 can be formed via a layer-by-layer manufacturing method such as a direct metal laser melting method. For example, in some aspects, the first insulative layer 113 can be formed using the same method as used to build the first lamina 110. For ease of understanding, aspects of the first insulative layer 113 are depicted schematically in FIG. 3 as being formed via a material jetting process, and aspects of the first insulative layer 113 are depicted schematically in FIG. 4 as being formed via a layer-by-layer manufacturing method such as a direct metal laser melting method. Regardless of the method used to build the first insulative layer, non-limiting aspects can include a subsequent sintering of the first insulative layer 113.

With reference to FIG. 3, in one exemplary aspect, the second material 72 can be applied or formed on the first surface 102 (e.g., a top surface) of the first lamina 110, using a conventional material jetting system 525. For example, the material jetting system 525 can include a print head 531 and a conventional positioning (for example a grid-type, or X-Y-Z type) system 540, which are cooperative with the controller 422 to apply the second material 72 onto the first surface 102. The print head 531 can be moveable via the positioning system 540. The second material 72 can be deposited using any convenient type of material application or print head 531, such as a conventional material jet print head, a piezoelectric print head, or a thermal print head. For example, without limitation, a conventional liquid metal jet (LMJ) print head can be used to propel the second material 72 to form the first insulative layer 113 on the first lamina 110.

In some aspects, a single print head 531 can be used to deposit the material forming the first insulative layer 113 onto the first lamina 110. Other aspects can comprise multiple print heads 531 to cooperatively deposit the second material 72.

In a non-limiting aspect, the print head 531 can be moveable via the conventional positioning system 540, which can be communicatively coupled to the controller module 422. The controller module 422 can include, for example, a 3D model of a part such as the first insulative layer 113 to be fabricated by AM system 100. Operations executed by controller module 422 can include controlling the speed and direction of the positioning system 540 and print head 531 to achieve a selective application, or "pass" of the second material 72 to form the first insulative layer 113. In some aspects, the material forming the first insulative layer 113 can be built up in a single "pass" or single layer to define the first insulative layer 113. In other aspects, the first insulative layer 113 can be built up in multiple successive "passes" or multiple successive layers to thereby define the first insulative layer 113.

In various aspects, the second material 72 can comprise any desired material without departing from the aspects described herein. Additionally, in non-limiting aspects, the second material 72 can optionally include (for example, by pre-mixing) a conventional binder or binder solution (not shown). In other aspects, a binder can be applied to the first insulative layer 113 via a conventional binder jet process (not shown). It will be appreciated that in various aspects, the second material 72 may comprise any one of a solid, a slurry, and a liquid.

In non-limiting aspects, when the second material 72 is deposited on the first surface 102, it is an electrically insulative material. In one non-limiting aspect, the material can comprise a mixture of aluminum oxide and titanium carbide composites. In other aspects, the material can comprise a mixture of aluminum oxide and zirconium dioxide. In some aspects, the second material 72 can be a ceramic material. For example, the second material 72 can include, without limitation aluminum oxide (Al₂O₃), silicon carbide (SiC), silicon dioxide (SiO₂), magnesium oxide (MgO), zirconium dioxide (ZrO₂), yttria stabilized zirconia (YSZ), Silicon Nitride (Si₃N₄), aluminum nitride (AlN), boron carbide (B₄C), and boron nitride (BN), individually, or in various combinations thereof. Additionally, the second material 72 can comprise any of glass and glass ceramics, such as Borosilicate glass, quartz, alumino-silicates, silicate ceramics, or magnesium silicates individually, or in various combinations thereof. In still other non-limiting aspects, the second material 72 can include non-binary ceramics such as aluminum titanate (AhTiOs), barium titanate (BaTiO₃), or zirconium titanate (ZrTiO₄) individually, or in various combinations thereof. In yet other non-limiting aspects, the second material 72 can include conductive ceramics such as carbides, borides, nitrides, silicides of d-block elements., including for example, titanium oxides (TiOₓ, where x < 1), titanium carbides (TiCₓ), titanium nitrides (TiNₓ), titanium boride (TiB2), zirconium diboride (ZrB₂), hafnium diboride (HfB2), tungsten carbide (WC), molybdenum disilicide (MoSi₂).

Moreover, to enhance the wettability or bonding ability of such insulative materials (i.e., to the first conductive layer 110), at least one of the first material 48 and the second material 72 may further optionally comprise a reactive element. For example, in a non-limiting aspect, the reactive element can comprise any of chromium (Cr), titanium (Ti), zirconium (Zr), hafnium (Hf), vanadium (V), or palladium (Pd), individually, or in various combinations thereof. In an aspect, the reactive metal can be pre-mixed or otherwise included with the first material 48 when printing the first lamina110. In other aspects, the reactive element can be deposited on one of the first laminate 110 or the first insulative layer 113 through any number of conventional deposition techniques such as sputter deposition or physical vapor deposition. The reactive element is operative to react and bond with the insulating material 72 and the conductive first material 48.

In other non-limiting aspects, when the second material 72 comprising the first insulative layer 113 is deposited on the first surface 102, it can be an electrically conductive material. In still other non-limiting aspects, when the second material 72 comprising the first insulative layer 113 is deposited on the first surface 102, it is an electrically semi-conductive material. In still other non-limiting aspects, the second material 72 comprising the first insulative layer 113 can be the same material used to form the first lamina 110.

For example, in non-limiting compositions the second material 72 can comprise a composition of Fe-Si with a percentage by weight, (wt. %) of silicon between 0.1 wt.% and 6.5 wt.%. In other non-limiting compositions, the second material 72 can comprise iron cobalt alloys having a composition containing cobalt between 5 wt.% and 50 wt.%, vanadium between 0 wt.% and 2 wt.%, niobium between 0 wt.% and 0.5%, and chromium between 0 wt.% and 1 wt.%. Still other non-limiting compositions of the second material 72 can comprise a powder including iron nickel alloys with a composition containing nickel between 30 wt.% and 80 wt.%. Other non-limiting compositions of second material 72 can comprise any number of other conductive compositions, and can be magnetic or non-magnetic, without departing from the aspects of the disclosure explained herein.

In some non-limiting aspects, the second material 72 can comprise a metal alloy that can include iron, cobalt, vanadium, and carbon. In some other aspects, the metal alloy can include iron, cobalt, vanadium and niobium. In still other aspects, the metal alloy can include iron, cobalt, vanadium, niobium and carbon.

In some aspects, the second material 72 can further include a first alloying element present in the range of about 0.001 atomic percent to about 10 atomic percent selected from the group consisting of boron, aluminum, silicon, germanium, yttrium, titanium, zirconium, hafnium, vanadium, niobium, tantalum, chromium, molybdenum, tungsten, manganese, rhenium, ruthenium, rhodium, iridium, nickel, palladium, platinum, copper, silver, gold, and combinations thereof, and a second alloying element present in the range of about 0.001 atomic percent to about 0.5 atomic percent selected from the group consisting of carbon, oxygen, nitrogen, and combinations thereof. In some aspects, the first alloying element can be present in a range of about 0.01 atomic percent to about 7 atomic percent. In certain embodiments, the first alloying element may be present in a range of about 0.1 atomic percent to about 5 atomic percent. In certain aspects, the second material 72 can include vanadium, niobium, carbon and a combination thereof. Vanadium and niobium, individually, may be present in a range of about 0.1 atomic percent to about 10 atomic percent. In some aspects, vanadium and niobium, individually, may be present in a range of about 0.1 atomic percent to about 5 atomic percent.

In non-limiting aspects, the second material 72 used to build or form the first insulative layer 113 can be deposited as relatively small spherical droplets or particles. For example, the second material 72 forming the first insulative layer 113 can comprise particles of the having sizes of less than 15 microns. In other non-limiting aspects, the second material 72 can comprise particles having diameters ranging from, for example, 15 to 45 microns. Still other aspects can include a second material 72 comprising particles having diameter ranging from 44 to 150 microns. In other aspects, the second material 72 forming the first insulative layer 113 can comprise any desired particle size without departing from aspects of the disclosure described herein. Referring now to FIG. 4, an alternative aspect of forming the first insulative layer via a layer-by-layer manufacturing method such as a direct metal laser melting method is shown. In a similar arrangement to that used to form the first lamina 110, the first insulative layer 113 may likewise be built up on the first surface 102, (e.g. a top surface) of the first lamina 110.

For example, the conventional powder delivery system 58 powder delivery piston 59 can move in the first direction 61 to advance the powder delivery table 60 to deliver the second material 72 in powder form. The height of the build platform 56 can be adjusted in the second direction 63 (e.g., lowered) and the second material 72 forming the first insulative layer 113 can be deposited on the first surface 102 of first lamina 110. The powder second material 72 can be arranged using the spreader 62 to a predetermined thickness across the first surface 102 (e.g., the top surface of first lamina 110).

That is, in an aspect, following a like process as described herein to build the first lamina 110, a layer of the second material 72 in the form of a metal powder can be deposited by the powder delivery system 58 onto the first surface 102 of the first lamina 110 when supported by the build platform 56, and spread using the spreader 62 to a predetermined thickness. The scanner 425 can then cooperatively position the laser beam 432 to provide heat to selective portions of the layer of the second material 72 causing the metal powder to completely or at least partially melt at those selective locations. As the melted powder of second material 72 at the selective location cools, it subsequently fuses to itself, and to the first lamina 110 to thereby form the first insulative layer 113 thereon. This process is repeated until all desired layers of the first insulative layer 113 are printed, that is, until a predetermined thickness or geometry of the first insulative layer 113 is reached. For example, the build platform 56 can be lowered or dropped, making room or allowing for space for an additional layer of second material 72 to be added onto the prior layer of second material 72. It will be appreciated that any number of layers having any desired thickness can be used without departing from the scope of the claims in order to build the first insulative layer 113 to a predetermined thickness. Again, any excess, unused, or unmelted powder of the second material 72 can be brushed, blown, jetted, or blasted away, or remain in-place, in-between successive layering or melting cycles.

In an aspect, once the second material 72 is deposited or built-up, and it is determined to have reached a desired or predetermined thickness, the second material 72 can then be sintered to define the first insulative layer 113 Additionally, in some aspects, the deposited second material 72 can be further treated such as by a heat treatment. In still other aspects, the second material 72 can be additionally or alternatively be chemically treated. As will be described in more detail herein, the treatment can vary in dependence upon the physical properties of the second material 72 used to form the first insulative layer 113. In some aspects, the treatment reduces the electrical conductivity of the second insulative layer 113. In some aspects, the treatment causes the material forming the first insulative layer 113 to become electrically non-conductive.

For example, in a non-limiting aspect, the first insulative layer 113 can be built up using a non-conductive second material 72, and in the event it is determined to have reached a predetermined thickness, a conventional laser sintering process can be applied to the second material 72 to thereby define the first insulative layer 113. In other aspects, the first insulative layer 113 can be built up using a conductive second material 72. In the event it is determined the conductive second material 72 has reached a predetermined thickness, the built-up conductive second material 72 can be sintered via a conventional laser sintering process, and then selectively treated via at least one of a heat treatment and a chemical treatment to reduce the conductivity of the second material 72 such that it becomes insulative, and thereby define the first insulative layer 113. It will be appreciated that the specific sintering process characteristics (for example, the laser power level, scanning speed, etc.) will differ in dependence upon the physical characteristics of selected second material 72.

The AM system 100 can comprise any number of conventional sintering methods such as laser sintering or chemical sintering to define the first insulative layer 113. As will be understood, in other aspects, the conventional laser or chemical sintering process can further include a conventional heat-treating process.

For example, as depicted in FIG. 4 a laser beam 432 can be selectively applied to the second material 72 forming the first insulative layer 113 to thereby sinter selective portions thereof to thereby define the first insulative layer 113. A conventional laser scanner device 425 can be arranged to cooperate with the control module 422 to direct the application of a laser beam 432 in a known manner to selective locations on the first insulative layer 113. The controller module 422 can be operative to execute instructions, based on data defining the first insulative layer 113, to cause the scanner 425 and heat source 431, to direct the laser beam 432 to predetermined locations of the first insulative layer 113. The localized heat from laser beam 432 sinters the second material 72 at those predetermined locations thereby defining the first insulative layer 113.

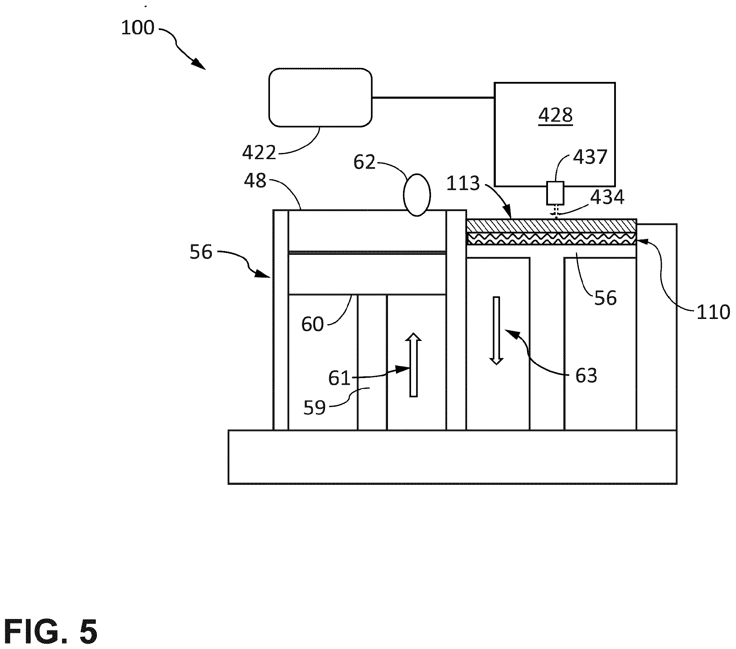

In other aspects, with reference to FIG. 5, in addition to sintering, the first insulative layer 113 may further be selectively treated to reduce its electrical conductivity and define the first insulative layer 113 via a chemical treatment. For example, in some aspects the second material 72 can be treated via a conventional plasma surface treatment. In various non-limiting aspects, a conventional atmospheric-pressure plasma device 428, such as for example, an electric arc, corona discharge, dielectric barrier discharge, or piezoelectric direct discharge, can provide a plasma jet 434.

In one non-limiting example, a high-voltage discharge (e.g., 5-15 kV, 10-100 kHz) pulsed electric arc (not shown) can be generated by the plasma device 428 to excite a process gas (for example, compressed air) and convert it to the a plasma jet 434. The plasma is passed through a conventional plasma jet head 437 and selectively applied to treat the deposited second material 72 and thereby reduce its conductivity.

It will be understood that the exemplary aspect employing an atmospheric pressure plasma device 428 is provided by way of non-limiting example only. Any number of alternative plasma surface treatment devices and methods may be used within the scope of the claims herein. Regardless of the type of plasma or chemical treatment used, the selective treatment reduces the electrical conductivity of the second insulative layer 113. In some aspects, the selective oxygen plasma treatment causes the material forming the first insulative layer 113 to become electrically non-conductive.

For example, in an aspect, the first insulative layer 113 is formed using a non-conductive second material 72, and in the event it is determined to have reached a predetermined thickness, a conventional chemical treatment process can be applied to the second material 72 to thereby define the first insulative layer 113. In another aspect, the first insulative layer 113 can be built up using a conductive second material 72. In the event it is determined the second material 72 has reached a predetermined thickness, the built up conductive second material 72 can then be selectively treated via a conventional plasma surface treatment, to reduce the conductivity of the second material 72 such that it becomes insulative, and thereby define the first insulative layer 113.

For example, a conventional plasma jet 434 can be selectively applied to the second material 72 forming the first insulative layer 113 to thereby treat predetermined portions thereof to thereby define the first insulative layer 113. A conventional plasma device 428 can cooperate with the controller module 422 to direct the application of the plasma jet 434 in a known manner to selective locations on the second material 72 forming the first insulative layer 113. The controller module 422 can be operative to execute instructions, based on data defining the first insulative layer 113, to cause the plasma device 428 to direct the plasma jet 434 to predetermined locations of the second material 72. The localized plasma treatment from plasma jet 434 reduces the conductivity of the second material 72 at those predetermined locations thereby defining the first insulative layer 113.

As will be understood, in other aspects, the conventional chemical treatment process can further include a conventional heat-treating process. For example, a second heat source 533 (FIG. 3), such as a UV light source or infrared light source, may be used to heat the first insulative layer 113 prior to, or subsequent to the chemical treatment or sintering.

With reference to FIGS. 8D-8E, once the first insulative layer 113 is formed and treated (e.g., sintered), a conductive second lamina 210 can be formed thereon. For example, the first insulative layer 113 can define a second surface 103, (e.g. a top surface) and the second lamina 210 can be formed thereon. A third material 49 comprising the conductive second lamina 210 is deposited directly onto the second surface 103 of the first insulative layer 210.

The AM system 100 can be used to build a second sheet or lamina 210 of component 500, in a layer-by-layer manufacturing process. The second lamina 210 can be fabricated in a manner identical to or differently from that used to build the first lamina 110. For example, the second lamina 210 can be built based on an electronic representation of a 3D geometry of second lamina 210. The electronic representation can be produced in a computer-aided design (CAD) or similar file (not shown). The CAD file of the second lamina 210 can be converted into a layer-by-layer format that includes a plurality of build parameters for each layer of second lamina 210. In an aspect, the geometry of second lamina 210 is sliced into a stack of layers of a desired thickness, such that the geometry of each layer is an outline of the cross-section through second lamina 210 at that particular layer location.

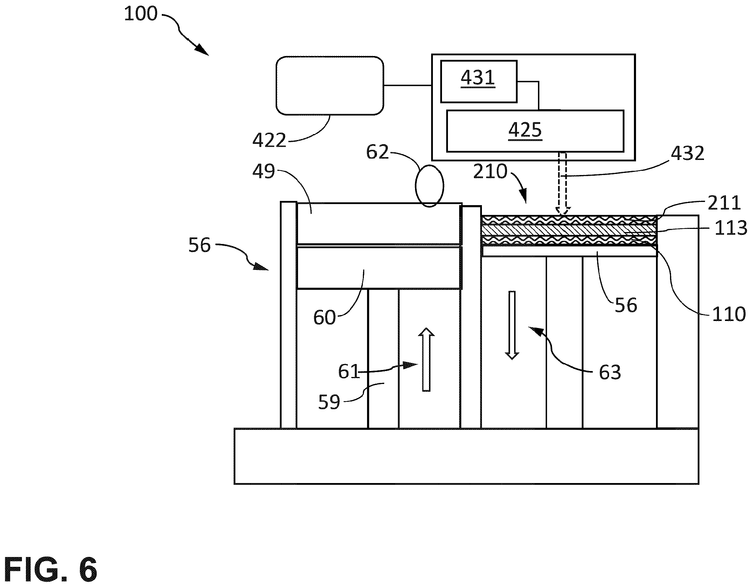

Referring now to FIG. 6, the AM system 100 can be operated to form second lamina 210 by implementing a layer-by-layer manufacturing method (for example, a direct metal laser melting method). The exemplary layer-by-layer additive manufacturing method does not use a pre-existing article as the precursor to a final component 500, rather the method produces second lamina 210 from a raw third material 49 in a configurable form, such as a powder. For example, without limitation, a steel second lamina 210 can be additively manufactured using a steel powder.

The powder delivery system 58 can advance the powder delivery table 60 in the first direction 61 using piston 59 to deliver the third material 49. The build platform 56 receives the third material 49 and is moveable in a second direction 63 to accommodate an increasing thickness of the second lamina 210 as it is built up. The third material 49 can be arranged using the spreader 62, to laterally spread a predetermined thickness of the third material 49 across the build platform 56. The conventional laser scanner device 425 is arranged to direct the application of laser beam 432 in a known manner to selective locations on the deposited third material 49. The controller module 422 is operative to execute instructions, based at least on the data defining the component to be created, to cause the scanner 425 and heat source 431, to cooperatively direct the laser beam 432 to predetermined locations of the spread third material 49 on the build platform 56. The localized heat from laser beam 432 causes the third material 49 to melt or sinter at those locations. The melted or sintered third material 49 can subsequently fuse to itself and thereby form a desired first layer 211 of the second lamina 210, for example.

The controller module 422 can include, for example, a 3D model of a part such as second lamina 210 to be fabricated by AM system 100. Operations executed by controller module 422 can include controlling power output of the heat source 431 and adjusting galvanometers (not shown) to control the speed and direction of the scanner 425 to achieve a selective application, or "pass" of the laser beam 432 to the first material 48.

In some aspects, the material forming the second lamina 210 can be formed or built in a single pass or single layer to define the second lamina 210. In other aspects, the second lamina 210 can be built up in multiple successive passes or multiple successive layers to thereby define the second lamina 210. In such an aspect, a height of a print bed or build platform 56 can be adjusted between each successive pass, and the process repeated, until the predetermined geometry or a predetermined thickness of the first lamina is achieved. In such an aspect, a height of build platform 56 can be adjusted between each successive pass, and the process repeated, until the predetermined geometry or a predetermined thickness of the second lamina 210 is achieved. For example, in or at each successive "pass" of forming a layer or lamina (such as the second lamina 210, or successive laminae), the build platform 56 can be lowered or dropped, making room or allowing for space for the following layer or lamina.

The build process of the second lamina 210 begins by spreading a relatively thin (e.g., between 0.001mm and 0.2mm) layer of a desired third material 49 onto the second surface 103 of the first insulative layer 113. In an aspect, the third material 49used to build the second lamina 210 can be identical to the first material 48 used to build the first lamina. In other aspects, a different conductive third material 49 can be used. In some aspects the third material can be selected from

In various aspects, the third material 49 can comprise any desired material. For example, in non-limiting compositions the material can comprise a composition of Fe-Si with a percentage by weight, (wt. %) of silicon between 0.1 wt.% and 6.5 wt.%. In other non-limiting compositions, the material can comprise iron cobalt alloys having a composition containing cobalt between 5 wt.% and 50 wt.%, vanadium between 0 wt.% and 2 wt.%, niobium between 0 wt.% and 0.5%, and chromium between 0 wt.% and 1 wt.%. Still other non-limiting compositions can comprise a powder including iron nickel alloys with a composition containing nickel between 30 wt.% and 80 wt.%. Other non-limiting compositions can comprise any number of other conductive compositions, and can be magnetic or non-magnetic, without departing from the aspects of the disclosure explained herein.

In some non-limiting aspects, the third material 49 can comprise a metal alloy that can include iron, cobalt, vanadium, and carbon. In some other aspects, the metal alloy can include iron, cobalt, vanadium and niobium. In still other aspects, the metal alloy can include iron, cobalt, vanadium, niobium and carbon.

In some aspects, the third material 49 can further includes a first alloying element present in the range of about 0.001 atomic percent to about 10 atomic percent selected from the group consisting of boron, aluminum, silicon, germanium, yttrium, titanium, zirconium, hafnium, vanadium, niobium, tantalum, chromium, molybdenum, tungsten, manganese, rhenium, ruthenium, rhodium, iridium, nickel, palladium, platinum, copper, silver, gold, and combinations thereof, and a second alloying element present in the range of about 0.001 atomic percent to about 0.5 atomic percent selected from the group consisting of carbon, oxygen, nitrogen, and combinations thereof. In some aspects, the first alloying element can be present in a range of about 0.01 atomic percent to about 7 atomic percent. In certain embodiments, the first alloying element may be present in a range of about 0.1 atomic percent to about 5 atomic percent. In certain aspects, the third material 49 can include vanadium, niobium, carbon and a combination thereof. Vanadium and niobium, individually, may be present in a range of about 0.1 atomic percent to about 10 atomic percent. In some aspects, vanadium and niobium, individually, may be present in a range of about 0.1 atomic percent to about 5 atomic percent.

In non-limiting aspects, the third material 49 can comprise particles having diameters ranging from, for example, 15 to 45 microns. Other aspects can comprise a third material 49 comprising particles having diameter ranging from 44 to 150 microns.

The build platform 56 is moveable in a second direction 63 to accommodate an increasing thickness of the second lamina 210 as it is built. The controller module 422 can then execute instructions to direct a scanner 425 and a heat source 431, to cooperatively provide sufficient heat via a laser 432 or electron beam to the third material 49 on the build platform to completely or at least partially melt the first material 48 and enable the third material 49 to fuse to itself and thereby form a desired first layer 211 of the second lamina 210 based at least on the data in the CAD file. The height of the build platform 56 can then be adjusted in the second direction 63 (e.g., lowered) and the process is repeated to build a next or second layer 212 or portion of the second lamina 210. That is, a new or second layer 212 of third material 49 is deposited onto a surface 104 (e.g. a top surface) of the first layer 211 of the second lamina 210 supported by the build platform 56, and arranged using the spreader 62 to a desired thickness. The heat source 431 and scanner 425 then cooperatively heat the second layer of third material 49 via laser 432 or electron beam causing the third material 49 to completely or at least partially melt and fuse to itself and to the first layer 211 of the second lamina 210, to thereby form a second layer 212 of the second lamina 210. This process is repeated until all desired layers of the second lamina 210 are printed, that is, a predetermined thickness or geometry of the second lamina 210 is reached. Again, excess, unused, or unmelted third material 49 can be brushed, blown, jetted, or blasted away, or remain in-place, in-between successive layering or melting cycles.

For ease of understanding, the method of building or forming the second lamina 210 is described herein using two layers 211, 212. However, it will be appreciated that any number of layers having any desired thickness can be used without departing from the scope of the claims in order to build the second lamina 210 to a predetermined thickness. Additionally, in some aspects, each layer 211, 212 can comprise an identical thickness, or different thicknesses compared to any other layer 211, 212 forming the second lamina 210. When the desired thickness of the component 500 is reached, it can be removed from the build table 56. In various aspects, when fabricated, the laminated component 500 can be further heat treated using any conventional heat treatment process.

It will be appreciated that the heat treatment process can be applied in bulk (that is a heat treatment applied to a fully assembled laminated component 500. In other aspects the heat treatment can comprise a layer-by-layer heat treatment (that is after each layer is built, as the laminated component 500 is being formed).

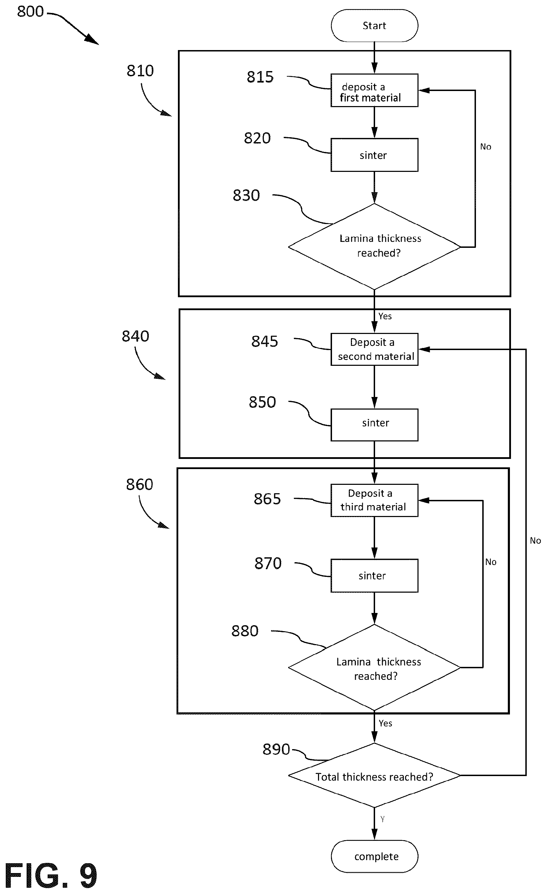

A method 800 of forming a laminated component 500 in accordance with a non-limiting aspect is shown in FIG. 9. The sequence depicted is for illustrative purposes only and is not meant to limit the method 800 in any way as it is understood that the portions of the method can proceed in a different logical order, additional or intervening portions can be included, or described portions of the method can be divided into multiple portions, or described portions of the method can be omitted without detracting from the described method.

The method 800 begins at 810 by forming a first lamina or sheet with a conductive first material, for example by using an additive manufacturing process. In an aspect, at step 815, the first lamina can be formed by depositing a layer of a powdered conductive first material. In one non-limiting aspect, the conductive first material can be a magnetic material such as cobalt iron. In some aspects, the conductive first material is deposited on a supportive surface such as a build table. At 820, the first lamina can be further formed by selectively sintering the deposited conductive first material, for example using a conventional metal laser sintering process. At 830, it is determined whether the first lamina has reached a predetermined thickness. In the event the first lamina has not reached the predetermined thickness, steps 815 and 820 can be repeated, that is, the first material is deposited on the previously deposited layer of the first material to build it up or further increase its thickness. In an aspect, the newly added first material can be selectively sintered, for example using a conventional metal laser sintering process.

At 830, in the event it is determined the first lamina has reached a predetermined thickness, the method continues by forming a first insulation layer, at 840. In an aspect, the forming the first insulation layer can comprise, at 845, depositing a second material on a top surface of the first lamina until a desired thickness of the second material is reached. The second material can be in the form of a powder. In other aspects, the second material can be in the form of a slurry or a liquid. The second material can be deposited using a conventional material jetting process. In still other aspects, the material can be deposited using a conventional aerosol jet spray deposition process.

Once the second material forming the first insulative layer is deposited, then, at 850 the first insulative layer is treated, for example using a conventional metal laser sintering process.

The method 800 continues at 860 by forming a second lamina or sheet with a conductive third material, for example by using an additive manufacturing process. In an aspect, at 865, the conductive third material can be deposited on a top surface of the first insulative layer. In one non-limiting aspect, the conductive first material can be a magnetic material such as cobalt iron. In some aspects, the conductive third material is the same composition as the conductive first material. At 870, the second lamina is further formed by selectively sintering the deposited conductive third material, for example using a conventional metal laser sintering process. At 880, it is determined whether the second lamina has reached a predetermined thickness. In the event the second lamina has not reached the predetermined thickness, steps 865 and 870 are repeated, that is, the third material is again deposited on a surface of the second lamina to build it up or further increase its thickness, and the newly added third material is selectively sintered, for example using a conventional metal laser sintering process.

In some aspects, at 890, it is determined whether a desired or predetermined total thickness of the laminated component 500 has been reached. Alternatively, at 890 it can be determined whether a desired or predetermined number of lamination layers, insulation layers, or both, has been reached. In the event it is determined that the total thickness of the laminated component 500, the number of lamination layers, insulation layers, has not been reached, the process 800 can be selectively repeated. For example, if at 890, it is determined the predetermined total thickness of the laminated component 500 has not been reached, steps 840 and 860 can be iteratively repeated until the predetermined total thickness of the laminated component is reached. In various aspects, the steps 810, 840, 860 can be done in any order, or skipped, or repeated as desired to form the laminated component 500 as desired without departing from the scope of the disclosure. Accordingly, the laminated component 500 formed by method 800 can have any desired number, and any desired order, of alternating first lamina, first insulating layer, and second lamina.

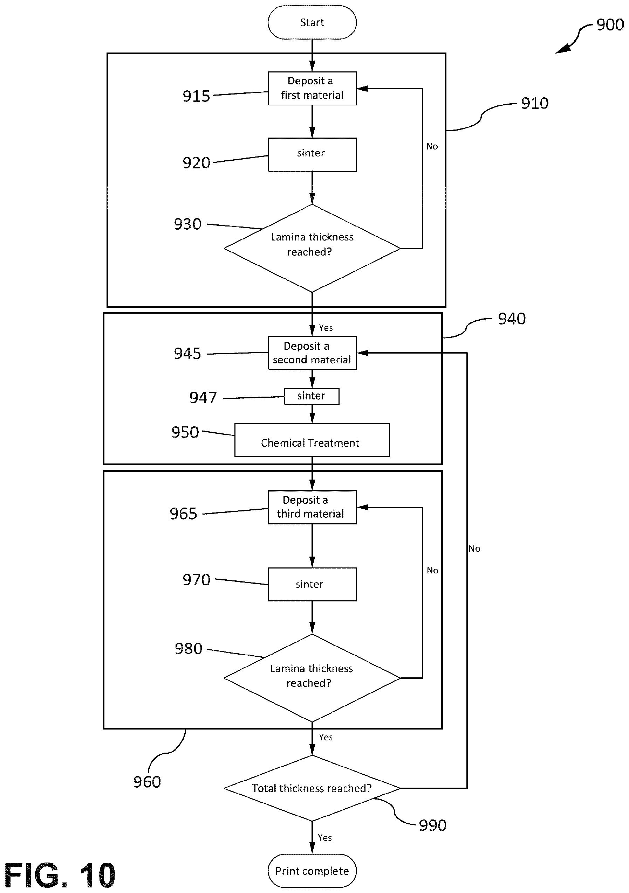

Another non-limiting aspect of a method 900 of forming a laminated component 500 is shown in FIG. 10. One notable difference between the method 900 and the method 800 described herein is that in addition to using a conventional sintering process on the second material deposited to form the first insulative layer (as in aspects of method 800), aspects of method 900 can additionally include a heat treating or a conventional chemical treating process to reduce the conductivity of the first insulative layer. The non-limiting sequence as depicted in FIG. 10 is for illustrative purposes only and is not meant to limit the method 900 in any way as it is understood that the portions of the method can proceed in a different logical order, additional or intervening portions can be included, or described portions of the method can be divided into multiple portions, or described portions of the method can be omitted without detracting from the described method.

The method 900 begins at 910 by forming a first lamina or sheet with a conductive first material, such as by using an additive manufacturing process. For example, various aspects may form the first lamia using conventional Direct Metal Laser Melting (DMLM) techniques. Other aspects may employ conventional laser powder bed fusion (LPBF) techniques. Still other aspects may employ any other desired AM technique to form the first lamina without departing from the scope of the disclosure. In an aspect, at step 915, the first lamina can be formed by depositing a powdered conductive first material. In one non-limiting aspect, the conductive first material can be a magnetic material such as cobalt iron. In some aspects, the conductive first material is deposited on a supportive surface such as a build table. At 920, the first lamina is further formed by selectively sintering the deposited conductive first material, for example using a conventional metal laser sintering process. At 930, it is determined whether the first lamina has reached a predetermined thickness. In the event the first lamina has not reached the predetermined thickness, steps 915 and 920 are repeated, that is, the first material is deposited on a surface of the first lamina to build it up or further increase its thickness, and the newly added first material is selectively sintered, for example using a conventional metal laser sintering process.

At 930, in the event it is determined the first lamina has reached a predetermined thickness, the method continues with a building up of a first insulation layer at 940. In an aspect, the building of the first insulative layer can comprise using an additive manufacturing process. For example, the conductive material can be built up using a conventional DMLM techniques. Other aspects may employ conventional LPBF techniques. Still other aspects may employ any other desired AM technique to form the first insulative layer without departing from the scope of the disclosure. In an aspect, at 945, second material is deposited on a first surface of the first lamina until a desired thickness of the second material is reached. In an aspect, the second material can be a conductive material such as a powdered metal.

Once the second material forming the first insulative layer is deposited in 945, then at 947, the first insulative layer is sintered, for example via a conventional laser sintering process. Next, at 950, the sintered first insulative layer is treated, for example using a conventional chemical treatment process to reduce the conductivity of the second material of the first insulative layer. In some aspects the chemical treatment can be surface plasma treatment. In some aspects, the conventional chemical treatment process can further comprise a heat-treating process.

The method 900 continues at 860 by forming a second lamina or sheet with the conductive third material, for example by using an additive manufacturing process. In an aspect, the second lamina can be formed using the same process that was used to form the first lamina. In an aspect, at 965, the conductive third material can be deposited on a surface of the first insulative layer. In one non-limiting aspect, the conductive third material can be a magnetic material such as cobalt iron. In some aspects, the conductive third material is the same composition as the conductive first material. At 970, the second lamina is further formed by selectively sintering the deposited conductive third material, for example using a conventional metal laser sintering process. At 980, it is determined whether the second lamina has reached a predetermined thickness. In the event the second lamina has not reached the predetermined thickness, steps 965 and 970 can be repeated, that is, the third material can be deposited on a surface of the second lamina to build it up or further increase its thickness, and the newly added third material can be sintered, for example using a conventional metal laser sintering process.

In some aspects, at 990, it is determined whether a desired or predetermined total thickness of the laminated component 500 has been reached. Alternatively, at 990 it can be determined whether a desired or predetermined number of lamination layers, insulation layers, or both, has been reached. In the event it is determined that the total thickness of the laminated component 500, the number of lamination layers, insulation layers, has not been reached, the process 900 can be repeated. For example, if at 990, it is determined the predetermined total thickness of the laminated component 500 has not been reached, steps 940 and 960 can be iteratively repeated until the predetermined total thickness of the laminated is reached. In various aspects, the steps 910, 940, 960 can be done in any order, or skipped, or repeated as desired to form the laminated component 500 as desired without departing from the scope of the disclosure. Accordingly, the laminated component 500 formed by method 900 can have any desired numbers of alternating first lamina, first insulating layer, and second lamina.

The aspects disclosed herein provide ferromagnetic device and method of making. The technical effect is that the above described aspects enable fabrication of a laminated electromagnetic device. Another technical effect is that because mechanical joints and connections are reduced over the prior art, an improved thermal and mechanical performance of the core is attained. Complex geometries, including cores having built-in or integral cooling channels, are also enabled resulting in improved performance. An additional technical effect that is realized in the above aspects is that the above described aspects result in a reduced core weight with a higher power density than compared with conventional systems.

To the extent not already described, the different features and structures of the various aspects can be used in combination with each other as desired. That one feature cannot be illustrated in all of the aspects is not meant to be construed that it cannot be, but is done for brevity of description. Thus, the various features of the different aspects can be mixed and matched as desired to form new aspects, whether or not the new aspects are expressly described. Combinations or permutations of features described herein are covered by this disclosure.

This written description uses examples to disclose aspects of the disclosure, including the best mode, and also to enable any person skilled in the art to practice aspects of the disclosure, including making and using any devices or systems and performing any incorporated methods. The patentable scope of the disclosure is defined by the claims, and can include other examples that occur to those skilled in the art. Such other examples are intended to be within the scope of the claims if they have structural elements that do not differ from the literal language of the claims, or if they include equivalent structural elements with insubstantial differences from the literal languages of the claims.

Further aspects of the invention are provided by the subject matter of the following clauses:
A method of making a component of an electric machine, comprising: forming a first lamina of a conductive first material; depositing a second material on a first surface of the first lamina; treating the second material to thereby define a first insulative layer; and forming, on the first insulative layer, a second lamina of a conductive third material.

The method of any preceding clause wherein the forming of the first and second lamina comprises depositing a metal powder, on a build surface and the first insulative layer, respectively, and sintering the metal powder.

The method of any preceding clause wherein the depositing and sintering steps are iteratively repeated until the first and second lamina reach a predetermined respective thickness.

The method of any preceding clause wherein the second material further comprises a binder material.

The method of any preceding clause wherein the treating step comprises a sintering.

The method of any preceding clause wherein the treating step comprises sintering the second material.

The method of any preceding clause, wherein the second material is an electrically conductive material.

The method of any preceding clause wherein treating step further includes at least one of a chemical treatment and a heat treatment.

The method of any preceding clause wherein the treating step reduces the conductivity of the second material.

The method of any preceding clause wherein the second material comprises wherein the second material comprises at least one of aluminum oxide (Al2O3), silicon carbide (SiC), silicon dioxide (SiO2), magnesium oxide (MgO), zirconium dioxide (ZrO2), yttria stabilized zirconia (YSZ), Silicon Nitride (Si3N4), aluminum nitride (AlN), boron carbide (B4C), and boron nitride (BN), glass, borosilicate glass, quartz, alumino-silicates, silicate ceramics, magnesium silicates, aluminum titanate (Al2TiO5), barium titanate (BaTiO₃), or zirconium titanate (ZrTiO₄) individually, or in combinations thereof.

The method of any preceding clause wherein the chemical treatment is a plasma surface treatment.

The method of any preceding clause further including the step of heat treating the first insulative layer.

The method of any preceding clause wherein the sintering is a laser sintering.

The method of any preceding clause wherein the first conductive material is magnetic.

The method of any preceding clause wherein the conductive first material is a different composition from the conductive third material.

An additive manufacturing system configured to form a first lamina of a conductive first material; deposit a second material on a first surface of the first lamina; treat the second material to thereby define a first insulative layer; and form, on the first insulative layer, a second lamina of a conductive third material.

The system of any preceding clause wherein the system is configured to treat the second material to thereby define the first insulative layer via a sintering process.

The system of any preceding clause wherein the system is configured to treat the second material to thereby define a first insulative layer via a sintering of the second material.

The system of any preceding clause wherein the second material is an electrically conductive material.

The system of any preceding clause wherein the system is configured to further treat the second material to thereby define a first insulative layer via at least one of a chemical treatment and a heat treatment.

The system of any preceding clause wherein the second material is electrically non-conductive.

The system of any preceding clause wherein the at least one of a chemical treatment and a heat treatment of the second material reduces the conductivity thereof.

## Claims

1. A method (800), (900) of making a laminated component (500) of an electric machine, comprising:
forming a first lamina (110) of a conductive first material (48);
depositing a second material (72) on a first surface (102) of the first lamina (110);
treating the second material (72) to thereby define a first insulative layer (113); and
forming, on the first insulative layer (113), a second lamina (210) of a conductive third material.

2. The method (800), (900) of claim 1 wherein the forming of the first and second lamina (110), (210) comprises depositing a metal powder (48), on a build surface (56) and the first insulative layer (110), respectively, and sintering the metal powder (48).

3. The method (800), (900) of claim 2 wherein the depositing and sintering steps are iteratively repeated until the first and second lamina (110), (210) reach a predetermined respective thickness.

4. The method (800), (900) of any preceding claim, wherein the second material (72) is an electrically conductive material.

5. The method (800), (900) of any preceding claim, wherein the treating step further includes at least one of a chemical treatment and a heat treatment.

6. The method (800), (900) of any preceding claim, wherein the treating step reduces the conductivity of the second material (72).

7. The method (800), (900) of any preceding claim, wherein the second material (72) comprises at least one of aluminum oxide (Al2O3), silicon carbide (SiC), silicon dioxide (SiO2), magnesium oxide (MgO), zirconium dioxide (ZrO2), yttria stabilized zirconia (YSZ), Silicon Nitride (Si3N4), aluminum nitride (AlN), boron carbide (B4C), and boron nitride (BN), glass, borosilicate glass, quartz, alumino-silicates, silicate ceramics, magnesium silicates, aluminum titanate (Al2TiO5), barium titanate (BaTiO₃), or zirconium titanate (ZrTiO₄) individually, or in combinations thereof.

8. The method (800), (900) of claim 5, or claim 6 or 7 when dependent on claim 5, wherein the chemical treatment is a plasma surface treatment.

9. The method (800), (900) of claim 8, further including the step of heat treating the first insulative layer (113).

10. The method (800), (900) of any preceding claim, wherein the conductive first material (48) is a different composition from the conductive third material (49).

11. An additive manufacturing system (100) for making a laminated component (500), configured to:
form a first lamina (110) of a conductive first material (48);
deposit a second material (72) on a first surface (102) of the first lamina (110);
treat the second material (72) to thereby define a first insulative layer (113); and
form, on the first insulative layer (113), a second lamina (210) of a conductive third material (49).

12. The system (100) of claim 11 wherein the system is configured to treat the second material (72) to thereby define the first insulative layer (113) via a sintering process.

13. The system (100) of claim 11 or 12, wherein the second material (72) is an electrically conductive material.

14. The system (100) of any of claims 11 to 13, wherein the system is configured to further treat the second material (72) to thereby define the first insulative layer (113) via at least one of a chemical treatment and a heat treatment.

15. The system (100) of claim 14, wherein the at least one of a chemical treatment and a heat treatment of the second material (72) reduces the conductivity thereof.
